# EUROPÄISCHE PATENTSCHRIFT

(11) **EP 2 053 327 B1**
(45) Veröffentlichungstag und Bekanntmachung des Hinweises auf die Patenterteilung: **13.07.2016**
(21) Anmeldenummer: 08018588.7
(22) Anmeldetag: 23.10.2008
(51) Int. Cl.: F25D 23/06

(54) **Haushaltgerät**
Household device
Appareil ménager

(30) Priorität: 26.10.2007 DE 202007014830 U; 01.02.2008 DE 202008001460 U
(43) Veröffentlichungstag der Anmeldung: 29.04.2009
(73) Patentinhaber: Liebherr-Hausgeräte Lienz GmbH, 9900 Lienz (AT)
(72) Erfinder: Hofman, Franz, 9904 Thurn (AT); Stocker, Richard, Ing., 9900 Lienz (AT); Lamp, Johannes, Ing., 9900 Lienz (AT)
(74) Vertreter: Herrmann, Uwe

(56) Entgegenhaltungen:
- EP-A- 0 251 782
- DE-A1- 19 959 454
- DE-U1-202007 001 432
- GB-A- 2 052 729
- GB-A- 2 161 049
- US-A- 4 563 559

## Beschreibung

Die vorliegende Erfindung betrifft ein Haushaltsgerät mit einem Gerätegehäuse, das ein oder mehrere Gehäuseelemente aufweist und das wenigstens einen Verbindungsbereich aufweist, in dem zwei Abschnitte des oder der Gehäuseelemente miteinander verbunden sind.

Aus dem Stand der Technik ist es bekannt, die Verbindungsbereiche von Gerätegehäusen derart auszugestalten, dass die beiden aneinander grenzenden Kanten der Gehäuseelemente durch einen Falz miteinander verbunden werden oder dass die beiden Kantenbereiche überlappt werden und mittels eines Schweißverfahrens, beispielsweise mittels des Verfahrens des Rollnahtschweißens miteinander verbunden werden.

Weitere gängige Verbindungstechniken bestehen darin, dass die Verbindung der Gehäuseelemente durch Schrauben, Nieten, etc. erfolgt.

Die EP 0 251 782 A1 offenbart ein Haushaltsgerät in Form einer Mikrowelle gemäß dem Oberbegriff von Anspruch 1 mit einem Verbindungsmechanismus für mehrere Gehäuseaußenteile eines Mikrowellengehäuses. An einem Gehäuseteil sind dabei Verbindungselemente vorgesehen, die mit dazu passenden Verbindungselementen an einem zweiten Gehäuseteil selbstarretierend und ohne zusätzliche Fixierungselemente eine Rastverbindung eingehen.

Die US 4,563,559 A offenbart ein Gehäuse für einen Backofen, wobei die Verbindung zweier Gehäuseteile dadurch erfolgt, dass die Gehäuseteile zunächst aneinandergelegt werden, wobei passende gegensätzliche Verbindungselemente zur Deckung gebracht werden, und diese Teile dann durch Verbiegen der Verbindungselemente verbunden werden.

Die oben genannten Verbindungstechniken sind vergleichsweise aufwendig durchzuführen und material-, kosten- und zeitintensiv sowie aufgrund ihrer großvolumigen Bauweise sehr platzraubend.

Die Aufgabe der vorliegenden Erfindung besteht somit darin, ein Haushaltsgerät der eingangs genannten Art dahingehend weiterzubilden, dass eine einfache und gleichzeitig zuverlässige Verbindung des oder der Gehäuseelemente realisiert werden kann.

Diese Aufgabe wird durch ein Haushaltsgerät mit den Merkmalen des Anspruchs 1 gelöst.

Danach ist vorgesehen, dass das Gehäuseelement oder wenigstens eines der Gehäuseelemente ein oder mehrere Verbindungselemente aufweist, die derart ausgeführt sind, dass die Verbindung in dem Verbindungsbereich selbstarretierend sowie ohne zusätzliche Fixierungselemente ausgeführt ist.

Auf diese Weise ist es möglich, beispielsweise durch einfaches Zusammenstecken eine Verbindung der Abschnitte des oder der Gehäuseelemente zu bewirken, wobei Zusatzelemente, wie Schrauben, Nieten, etc. nicht zum Einsatz kommen. Die Montage des Gerätegehäuses eines erfindungsgemäßen Haushaltsgerätes ist daher einfach, schnell und dennoch zuverlässig möglich.

Die Lagerung der vorzugsweise vorgestanzten Teile, kann ohne großen Platzbedarf auf Paletten, Gitterboxen (oder ähnlichem) erfolgen. Der Zusammenbau kann unmittelbar vor Ort (Z. B. Schäumerei) durchgeführt werden (kurzfristig).

In der Erfindung ist vorgesehen, dass der Verbindungsbereich schaumdicht ausgeführt ist. Somit ist die vorliegende Erfindung vorzugsweise überall dort einsetzbar, wo verbundene Bauteile in Folge ausgeschäumt werden.

Auch ist es denkbar, die Schaumdichtheit durch Verkleben oder durch Abkleben z. B. mit einem Klebeband herzustellen. In Betracht kommt z. B. ein PE-Band, das z. B. eine Breite im Bereich von 40 mm - 80 mm, vorzugsweise 60 mm aufweist.

Die Verbindungselemente können derart ausgeführt sein, dass die Selbstarretierung durch Formschluss erfolgt.

Weiterhin kann vorgesehen sein, dass an einem Abschnitt eines Gehäuseelementes eine oder mehrere Vorsprünge und an dem mit diesem Abschnitt in Verbindung stehenden Abschnitt eines Gehäuseelementes eine oder mehrere Ausnehmungen vorgesehen sind, in denen die Vorsprünge formschlüssig aufgenommen sind.

An dem oder den Vorsprüngen können Laschen ausgebildet sein, die wenigstens im montierten Zustand des Gehäuses aus der durch den Vorsprung gebildeten Ebene herausragen.

Im Bereich der Ausnehmungen können Arretierungselemente vorgesehen sein, die derart auf die Laschen einwirken, dass die Laschen nicht entgegen der Fügerichtung, das heißt nicht entgegen der Richtung, in der Teile zusammengefügt wurden, bewegbar sind.

Ein Abschnitt eines Gehäuseelementes kann einen gegenüber der Außenseite zurückversetzten Bereich aufweisen, wobei die wenigstens eine Ausnehmung in diesem zurückversetzten Bereich angeordnet sein kann.

Dabei kann vorgesehen sein, dass der zurückversetzte Bereich aus einem ersten Bereich besteht, der parallel oder im wesentlichen parallel zur Außenseite des Gehäuseelementes verläuft und aus einem zweiten Bereich besteht, der gegenüber dem ersten Bereich im Winkel, vorzugsweise im spitzen Winkel, verläuft.

Die wenigstens eine Ausnehmung kann dort angeordnet sein, wo der erste Bereich in den zweiten Bereich übergeht. Somit ist die Ausnehmung in diesem Fall nicht im Bereich der Gehäuseaußenseite, sondern gegenüber dieser zurückversetzt angeordnet.

In weiterer Ausgestaltung der Erfindung ist vorgesehen, dass der oder die Vorsprünge in einem Bereich angeordnet sind, der gegenüber der Außenseite des Gehäuseelementes zurückversetzt ist. In diesem Fall findet die Verbindung zwischen den Abschnitten des oder der Gehäuseelemente somit nicht im Bereich der Außenseite sondern in einem gegenüber der Außenseite zurückversetzten Bereich der Gehäuseelemente bzw. des Gehäuses statt.

Das Gerätegehäuse kann beispielsweise aus zwei oder auch aus vier Gehäuseelementen zusammengesetzt sein. Grundsätzlich ist auch eine einteilige Ausführung denkbar, wobei zwei aneinandergrenzende Kanten des Gehäuseteils in dem Verbindungsbereich miteinander in Verbindung stehen.

Das oder die Gehäuseelemente können beispielsweise aus Kunststoff oder aus Metall bestehen. Es sind beispielsweise Blech- und Kunststoffverbindungen möglich, wobei Schwarzblech, Edelstahl oder Coil-Coating-Materialien zum Einsatz kommen können.

Die vorliegende Erfindung ist beispielsweise bei Kühlschränken, Gefrierschränken, Haushaltstruhen, Gewerbetruhen, etc. anwendbar. In bevorzugter Ausgestaltung der Erfindung handelt es sich somit bei dem Haushaltsgerät um ein Kühl- und/oder Gefriergerät.

Weitere Einzelheiten der Erfindung werden anhand eines in der Zeichnung dargestellten Ausführungsbeispiels erläutert. Es zeigen:
- Figur 1:: eine perspektivische Darstellung eines Gerätegehäuses eines Haushaltsgerätes gemäß der vorliegenden Erfindung mit zusammengefügten Gehäuseelementen,
- Figur 2:: eine perspektivische Darstellung zweier Gehäuseelemente vor dem Zusammenfügen und
- Figur 3:: eine Schnittdarstellung eines Verbindungsbereiches eines Gerätegehäuses eines Haushaltsgerätes gemäß der vorliegenden Erfindung.

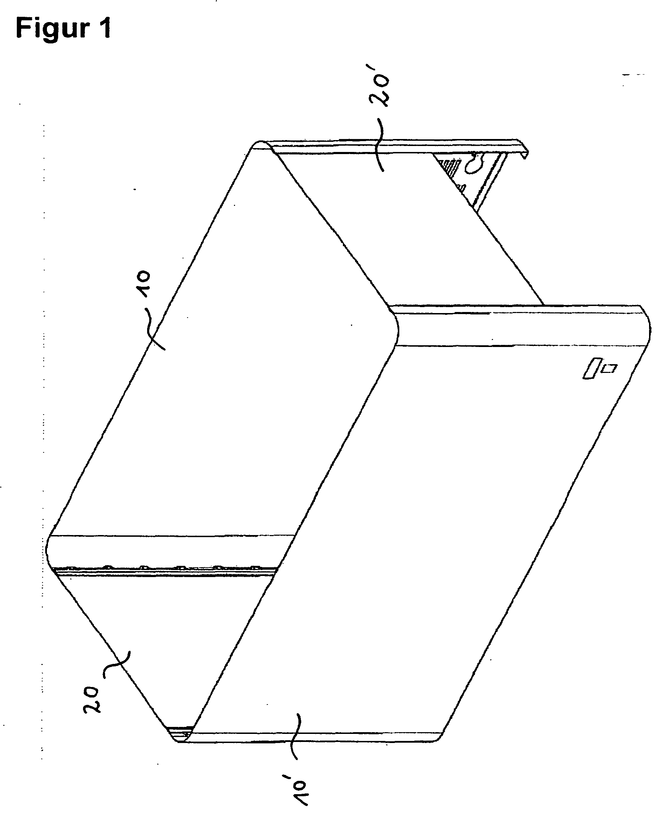

Figur 1 zeigt mit dem Bezugszeichen 10, 10', 20, 20' vier zu einem Gerätegehäuse zusammengesetzte Gehäuseelemente, wobei zwei der Gehäuseelemente 10, 10' die Breitseiten und zwei der Gehäuseelemente 20, 20' die Schmalseiten des Gerätegehäuses bilden. Wie dies aus Figur 1 hervorgeht, sind die Schmalseiten 20, 20' als ebene Platten ausgeführt und die Breitseiten 10, 10' in ihrem Randbereich gebogen ausgeführt. Denkbar ist auch eine Ausgestaltung mit anderen Radien bzw. eine scharfkantige Ausgestaltung der Eckbereiche.

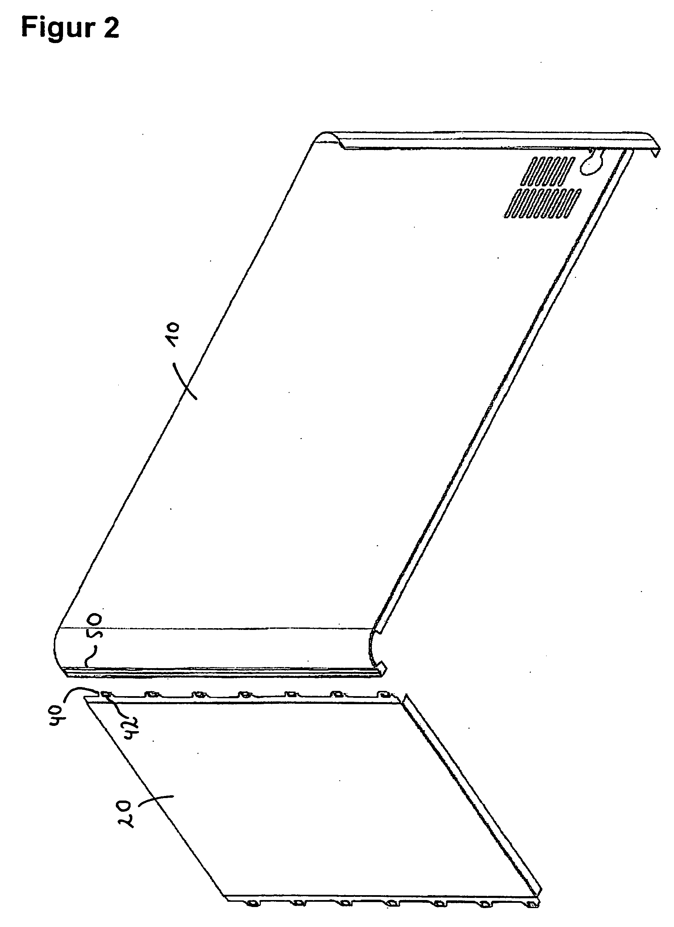

Figur 2 zeigt ein Gehäuseelement 20, das die Schmalseite des Gerätegehäuses bildet sowie ein Gehäuseelement 10, das die Breitseite des Gerätegehäuses bildet. Figur 2 zeigt diese beiden Elemente in einem Zustand vor dem Zusammenfügen.

Wie dies aus Figur 2 hervorgeht, befinden sich an dem Gehäuseelement 20 beidseitig mehrere von einander beabstandete Vorsprünge 40, in denen Laschen 42 ausgebildet sind, die gegenüber der durch die Vorsprünge gebildeten Ebene nach Innen, das heißt zu dem Geräteinnenraum hin vorstehen. Die Laschen 42 können ein- oder beidseitig abgerundete Einführschrägen aufweisen, wodurch die Montage und/oder die Arretierung erleichtert wird.

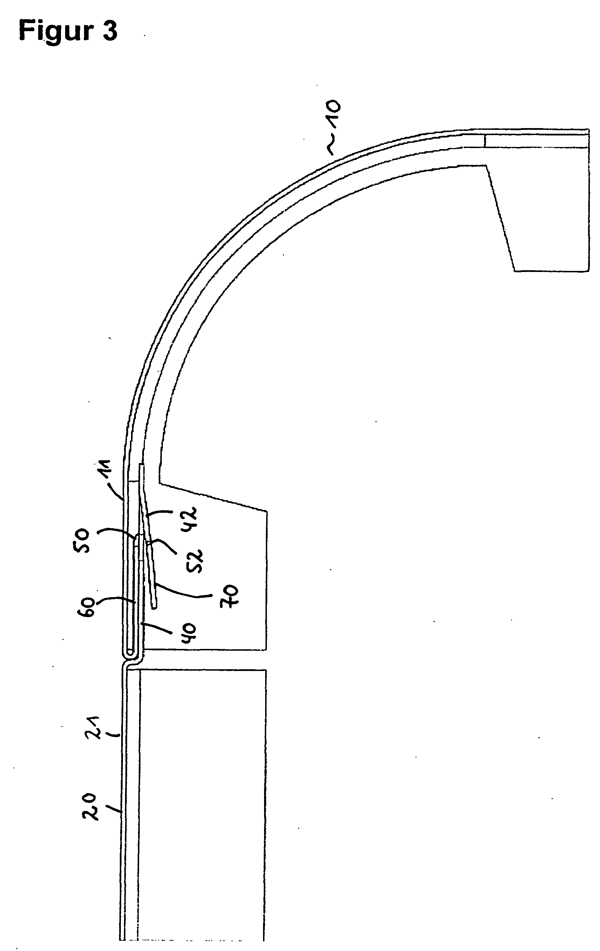

Das die Breitseite bildende Gehäuseelement 10 weist in seinen beiden Endbereichen mehrere voneinander beabstandete Ausnehmungen 50 auf, wie dies im Detail zu Figur 3 erläutert wird.

Das Gehäuseelement 10 könnte auch wie das Gehäuseelement 20 oder als eine Kombination aus beiden dargestellten Gehäuseelementen 10, 20 ausgeführt sein. Entsprechendes gilt für das Gehäuseelement 20.

Wie dies aus Figur 3 hervorgeht, besteht der Verbindungsbereich des Gehäuseelementes 10 aus einem gegenüber der Außenseite 11 zurückversetzten ersten Bereich 60 und einem zweiten Bereich 70. Der erste Bereich 60 steht mit der Außenseite 11 des Gehäuseelementes 10 durch einen U-förmig geformten Verbindungsabschnitt in Verbindung und verläuft parallel zu der Außenseite 11 des Gehäuseelementes 10. An diesen ersten Bereich 60 schließt sich ein zweiter Bereich 70 an, der mit dem ersten Bereich 60 in einem spitzen Winkel in Verbindung steht, wie dies aus Figur 3 hervorgeht. In dem Abschnitt, in dem der erste Bereich 60 in den zweiten Bereich 70 übergeht, befindet sich die Ausnehmung 50.

Das Gehäuseelement 20 könnte auch ohne Vor-/Rücksprung 40 hergestellt werden (dann allerdings mit einem Absatz an der Außenseite).

Wie dies weiter aus Figur 3 hervorgeht, weist das Gehäuseelement 20 Vorsprünge 40 auf, deren Laschen 42 derart ausgeführt und dimensioniert sind, dass sie im zusammengefügten Zustand an den Kanten des zweiten Bereichs 70 anliegen. Die zweiten Bereiche 70 dienen somit in ihren Kantenabschnitten als Arretierungselemente 52, die verhindern, dass die Vorsprünge 40 aus den Ausnehmungen 50 ohne weiteres entnommen werden können.

Die Laschen 42 sind flexibel ausgeführt und schnappen nach dem Einfügen in die aus Figur 3 ersichtliche Position, in der sie durch die Arretierungselemente 52 bzw. die zweiten Bereiche 70 fixiert werden.

Wie dies aus Figur 3 hervorgeht, befinden sich die Vorsprünge 40 ebenfalls zurückversetzt gegenüber der Außenseite 21 des Gehäuseelementes 20. Dabei stehen die Vorsprünge 40 über einen stufenförmigen Abschnitt mit der Außenseite 21 des Gehäuseelementes 20 in Verbindung. Der stufenförmige Abschnitt ist dabei derart dimensioniert, dass die Außenseiten 11, 21 der miteinander verbundenen Gehäuseelemente 10, 20 miteinander fluchten.

Grundsätzlich ist es ebenfalls denkbar, dass die Arretierungslaschen abweichen von Figur 3 auf die andere Seite, d. h. nach außen stehen.

Der Vorteil der erfindungsgemäßen Verbindungstechnik besteht darin, dass sie einerseits leicht auszuführen ist und zum anderen selbstarretierend ist. Es handelt sich um eine zusatzfreie Verbindungstechnik.

Diese ist anwendbar für Blech- und Kunststoffverbindungen, wobei die Blechverbindungen beispielsweise aus Schwarzblech, Edelstahl oder Coil-Coating-Materialien bestehen können.

Wie dies insbesondere aus Figur 3 hervorgeht, benötigt die erfindungsgemäße Verbindungstechnik nur eine geringe/flache Bauteiltiefe.

Durch die geformten Verbindungsabschnitte (U; Vorsprünge/Kröpfung etc.) ergeben sich auch statische Vorteile.

Ein besonderer Vorteil besteht darin, dass die Verbindungstechnik derart ausgeführt ist, dass sie schaumdicht ist, so dass sie insbesondere bei Haushaltsgeräten zum Einsatz kommt, bei denen ein Ausschäumen erforderlich ist. Beispiele sind Kühlgeräte, Gefriergeräte, wie Kühl- und/oder Gefrierschränke bzw. -truhen.

Ein weiterer Vorteil der Erfindung besteht darin, dass nur ein geringer Platzbedarf besteht und dass die Gehäuseelemente bzw. deren Verbindung leicht handlebar bzw. leicht herstellbar sind.

Weitere Vorteile bestehen in einer guten Wiederholgenauigkeit der einzelnen Gehäuseelemente sowie darin, dass eine hohe Flexibilität bei der Variantenfertigung durch Bereitstellung eines Baukastensystems möglich ist.

Die Gehäuseelemente können somit einen Baukasten bilden, in dem sie in unterschiedlichen Dimensionierungen verfügbar sind, so dass ohne weiteres unterschiedliche Gerätegehäuse gefertigt werden können.

## Patentansprüche

1. Haushaltsgerät mit einem Gerätegehäuse, das ein oder mehrere Gehäuseelemente (10, 10', 20, 20') aufweist und das wenigstens einen Verbindungsbereich aufweist, in dem zwei Abschnitte des oder der Gehäuseelemente (10, 10', 20, 20') miteinander verbunden sind,
wobei das oder wenigstens eines der Gehäuseelemente (10, 10', 20, 20') ein oder mehrere Verbindungselemente aufweist, die derart ausgeführt sind, dass die Verbindung in dem Verbindungsbereich selbstarretierend sowie ohne zusätzliche Fixierungselemente ausgeführt ist,
**dadurch gekennzeichnet, dass** der Verbindungsbereich schaumdicht ausgeführt ist, und dass im Verbindungsbereich ein Dichtelement zur Herstellung der Schaumdichtheit des Verbindungsbereichs vorgesehen ist.

2. Haushaltsgerät nach Anspruch 1, **dadurch gekennzeichnet, dass** es sich bei dem Dichtelement um Klebstoff oder um ein aufgeklebtes Dichtband handelt.

3. Haushaltsgerät nach einem der vorhergehenden Ansprüche, **dadurch gekennzeichnet, dass** die Verbindungselemente derart ausgeführt sind, dass die Selbstarretierung durch Formschluss erfolgt.

4. Haushaltsgerät nach einem der vorhergehenden Ansprüche, **dadurch gekennzeichnet, dass** an einem Abschnitt eines Gehäuseelementes (10, 10', 20, 20') ein oder mehrere Vorsprünge (40) und an einem mit diesem Abschnitt in Verbindung stehenden Abschnitt eines Gehäuseelementes (10, 10', 20, 20') eine oder mehrere Ausnehmungen (50) vorgesehen sind, in denen die Vorsprünge (40) formschlüssig aufgenommen sind.

5. Haushaltsgerät nach Anspruch 4, **dadurch gekennzeichnet, dass** in oder an dem oder den Vorsprüngen (40) Laschen (42) ausgebildet sind, die aus der durch den Vorsprung (40) gebildeten Ebene herausragen.

6. Haushaltsgerät nach Anspruch 4 oder 5, **dadurch gekennzeichnet, dass** im Bereich der Ausnehmungen (50) Arretierungselemente (52) vorgesehen sind, die derart auf die Laschen (42) einwirken, dass die Laschen (42) nicht entgegen der Fügerichtung bewegbar sind.

7. Haushaltsgerät nach einem der Ansprüche 4 bis 6, **dadurch gekennzeichnet, dass** ein Abschnitt eines Gehäuseelementes (10, 10', 20, 20') einen gegenüber der Außenseite zurückversetzten Bereich aufweist und dass die wenigstens eine Ausnehmung (50) in diesem Bereich angeordnet ist.

8. Haushaltsgerät nach Anspruch 4, **dadurch gekennzeichnet, dass** der zurückversetzte Bereich aus einem ersten Bereich (60) besteht, der parallel oder im wesentlichen parallel zur Außenseite (11) des Gehäuseelementes (10, 10', 20, 20') verläuft und aus einem zweiten Bereich (70) besteht, der gegenüber dem ersten Bereich (60) im Winkel, vorzugsweise im spitzen Winkel verläuft.

9. Haushaltsgerät nach Anspruch 8, **dadurch gekennzeichnet, dass** die wenigstens eine Ausnehmung (50) dort angeordnet ist, wo der erste Bereich (60) in den zweiten Bereich (70) übergeht.

10. Haushaltsgerät nach einem der Ansprüche 4 bis 9, **dadurch gekennzeichnet, dass** der oder die Vorsprünge (40) in einem Bereich angeordnet sind, der gegenüber der Außenseite (21) des Gehäuseelementes (10, 10', 20, 20') zurückversetzt ist.

11. Haushaltsgerät nach einem der vorhergehenden Ansprüche, **dadurch gekennzeichnet, dass** das Gerätegehäuse aus zwei oder vier Gehäuseelementen (10, 10', 20, 20') zusammengesetzt ist.

12. Haushaltsgerät nach einem der vorhergehenden Ansprüche, **dadurch gekennzeichnet, dass** das oder die Gehäuseelemente (10, 10', 20, 20') aus Kunststoff oder aus Metall bestehen.

## Claims

1. A household appliance with an appliance housing which includes one or more housing elements (10, 10', 20, 20') and which includes at least one connecting region in which two portions of the housing element(s) (10, 10', 20, 20') are connected with each other,
wherein the or at least one of the housing elements (10, 10', 20, 20') includes one or more connecting elements which are configured such that the connection is self-locking in the connecting region and is made without additional fixing elements,
**characterized in that** the connecting region is configured foam-tight, and that in the connecting region a sealing element is provided for producing the foam tightness of the connecting region.

2. The household appliance according to claim 1, **characterized in that** the sealing element is an adhesive or an adhered sealing tape.

3. The household appliance according to any of the preceding claims, **characterized in that** the connecting elements are configured such that self-locking is effected by positive connection.

4. The household appliance according to any of the preceding claims, **characterized in that** on a portion of a housing element (10, 10', 20, 20') one or more projections (40) and on a portion of a housing element (10, 10', 20, 20') connected with this portion one or more recesses (50) are provided, in which the projections (40) are positively received.

5. The household appliance according to claim 4, **characterized in that** in or on the projection(s) (40) tabs (42) are formed, which protrude from the plane formed by the projection (40).

6. The household appliance according to claim 4 or 5, **characterized in that** in the vicinity of the recesses (50) locking elements (52) are provided, which act on the tabs (42) such that the tabs (42) are not movable against the joining direction.

7. The household appliance according to any of claims 4 to 6, **characterized in that** a portion of a housing element (10, 10', 20, 20') includes a region set back with respect to the outer surface and that the at least one recess (50) is disposed in this region.

8. The household appliance according to claim 4, **characterized in that** the set-back region consists of a first region (60), which extends parallel or substantially parallel to the outer surface (11) of the housing element (10, 10', 20, 20'), and of a second region (70), which extends at an angle, preferably at an acute angle with respect to the first region (60).

9. The household appliance according to claim 8, **characterized in that** the at least one recess (50) is arranged where the first region (60) passes into the second region (70).

10. The household appliance according to any of claims 4 to 9, **characterized in that** the projection(s) (40) is/are arranged in a region which is set back with respect to the outer surface (21) of the housing element (10, 10', 20, 20').

11. The household appliance according to any of the preceding claims, **characterized in that** the appliance housing is composed of two or four housing elements (10, 10', 20, 20').

12. The household appliance according to any of the preceding claims, **characterized in that** the housing element(s) (10, 10', 20, 20') are made of plastics or of metal.

## Revendications

1. Appareil ménager comportant un boîtier d'appareil qui présente un ou plusieurs éléments de boîtier (10, 10', 20, 20') et qui présente au moins une zone de liaison dans laquelle deux tronçons du ou des éléments de boîtier (10, 10', 20, 20') sont reliés l'un à l'autre,
le ou au moins un des éléments de boîtier (10, 10', 20, 20') présentant un ou plusieurs éléments de liaison qui sont réalisés de telle sorte que dans la zone de liaison, la liaison est réalisée autobloquante ainsi que sans éléments de fixation additionnels,
**caractérisé en ce que** la zone de liaison est réalisée étanche par de la mousse et **en ce que** dans la zone de liaison, un élément d'étanchéité est prévu pour réaliser l'étanchéité mousse de la zone de liaison.

2. Appareil ménager selon la revendication 1, **caractérisé en ce que** l'élément d'étanchéité est un adhésif ou une bande d'étanchéité collée.

3. Appareil ménager selon l'une des revendications précédentes, **caractérisé en ce que** les éléments de liaison sont réalisés de telle sorte que l'autoblocage est produit par coopération de formes.

4. Appareil ménager selon l'une des revendications précédentes, **caractérisé en ce que** sur un tronçon d'un élément de boîtier (10, 10', 20, 20') sont prévus une ou plusieurs saillies (40) et sur un tronçon d'un élément de boîtier (10, 10', 20, 20'), qui est en liaison avec ce tronçon, sont prévus un ou plusieurs évidements (50) dans lesquels les saillies (40) sont reçues par coopération de formes.

5. Appareil ménager selon la revendication 4, **caractérisé en ce que** dans ou sur la ou les saillies (40) sont réalisées des pattes (42) qui dépassent hors du plan formé par la saillie (40).

6. Appareil ménager selon la revendication 4 ou 5, **caractérisé en ce que** dans la zone des évidements (50) sont prévus des éléments de blocage (52) qui agissent de telle sorte sur les pattes (42) que les pattes (42) ne peuvent pas être déplacées dans le sens opposé à la direction d'assemblage.

7. Appareil ménager selon l'une des revendications 4 à 6, **caractérisé en ce qu'**un tronçon d'un élément de boîtier (10, 10', 20, 20') présente une zone en retrait par rapport à la face extérieure et **en ce que** ledit au moins un évidement (50) est agencé dans cette zone.

8. Appareil ménager selon la revendication 4, **caractérisé en ce que** la zone en retrait est constituée par une première zone (60) qui s'étend parallèlement ou sensiblement parallèlement à la face extérieure (11) de l'élément de boîtier (10, 10', 20, 20'), et par une deuxième zone (70) qui s'étend sous un angle par rapport à la première zone (60), de préférence sous un angle aigu.

9. Appareil ménager selon la revendication 8, **caractérisé en ce que** ledit au moins un évidement (50) est agencé là où la première zone (60) passe dans la deuxième zone (70).

10. Appareil ménager selon l'une des revendications 4 à 9, **caractérisé en ce que** la ou les saillies (40) sont agencées dans une zone qui est en retrait par rapport à la face extérieure (21) de l'élément de boîtier (10, 10', 20, 20').

11. Appareil ménager selon l'une des revendications précédentes, **caractérisé en ce que** le boîtier d'appareil est composé par deux ou quatre éléments de boîtier (10, 10', 20, 20').

12. Appareil ménager selon l'une des revendications précédentes, **caractérisé en ce que** le ou les éléments de boîtier (10, 10', 20, 20') sont en matière plastique ou en métal.
